(19) Europäisches Patentamt
European Patent Office
Office européen des brevets

(11) **EP 2 118 449 B1**

(12) **EUROPÄISCHE PATENTSCHRIFT**

(45) Veröffentlichungstag und Bekanntmachung des Hinweises auf die Patenterteilung:
**28.11.2018 Patentblatt 2018/48**

(51) Int Cl.:
*H02P 9/00* *(2006.01)*        *F02C 9/28* *(2006.01)*
*H02P 27/16* *(2006.01)*

(21) Anmeldenummer: **08716794.6**

(22) Anmeldetag: **11.02.2008**

(86) Internationale Anmeldenummer:
**PCT/EP2008/051603**

(87) Internationale Veröffentlichungsnummer:
**WO 2008/098894 (21.08.2008 Gazette 2008/34)**

(54) **KRAFTWERKSANLAGE MIT EINEM VERBRAUCHER SOWIE VERFAHREN ZU DEREN BETRIEB**

POWER PLANT COMPRISING A CONSUMER AND METHOD FOR OPERATING SAID POWER PLANT

CENTRALE ÉLECTRIQUE COMPORTANT UN CONSOMMATEUR ET PROCÉDÉ DE FONCTIONNEMENT ASSOCIÉ

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **14.02.2007 CH 2462007**

(43) Veröffentlichungstag der Anmeldung:
**18.11.2009 Patentblatt 2009/47**

(73) Patentinhaber: **General Electric Technology GmbH**
**5400 Baden (CH)**

(72) Erfinder: **HOFFMANN, Jürgen**
**5417 Untersiggenthal (CH)**

(74) Vertreter: **General Electric Technology GmbH**
**Global Patent Operation - Europe**
**Brown Boveri Strasse 7**
**5400 Baden (CH)**

(56) Entgegenhaltungen:
EP-A- 1 253 388        WO-A-2006/103159
DE-A1- 4 438 186       DE-A1- 10 336 659
GB-A- 937 717          JP-A- 62 077 098
US-A- 4 219 738        US-A- 5 694 026
US-A1- 2004 119 293    US-A1- 2004 222 640

**Beschreibung**

TECHNISCHES GEBIET

Die vorliegende Erfindung bezieht sich auf das Gebiet der Kraftwerkstechnik. Sie betrifft eine Kraftwerksanlage gemäss dem Oberbegriff des Anspruchs 1.

STAND DER TECHNIK

Im Rahmen der Förderung und Verteilung von Erdgas werden zunehmend auch Technologien der Gasverflüssigung eingesetzt, um das Volumen zu reduzieren und das Gas in verflüssigter Form beispielsweise mit Spezialtankern kostengünstig transportieren zu können.

Innerhalb der grossen Erdgasverflüssigungsanlagen werden leistungsstarke Verdichter eingesetzt, mit denen das Erdgas im Verlaufe des Verflüssigungsprozesses verdichtet wird. Zum Antrieb dieser Verdichter werden zunehmend Gasturbinen verwendet, die beispielsweise das vorhandene Erdgas als Brennstoff nutzen. Diese Gasturbinen sind üblicherweise für den Antrieb von Generatoren zur Erzeugung von elektrischem Strom entwickelt worden, der dann in ein Netz mit einer vorgegebenen Netzfrequenz (z.B. 50 Hz oder 60 Hz) eingespeist wird.

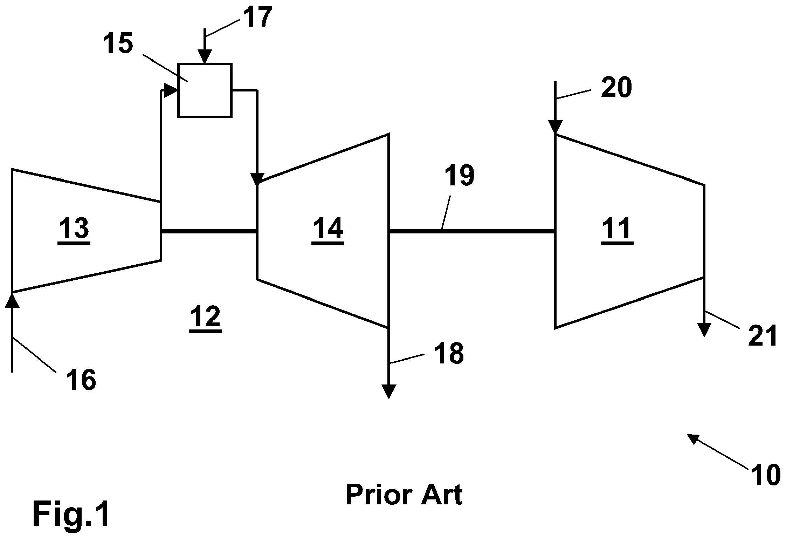

Fig. 1 zeigt in einer stark vereinfachten Darstellung einen Verdichterstrang 10 bekannter Art, bei dem eine Gasturbine 12 direkt mechanisch über eine Welle 19 einen Verdichter 11 einer Erdgasverflüssigungsanlage antreibt, der Gas über einen Gaseinlass 20 ansaugt und verdichtetes Gas an einem Gasauslass 21 abgibt. Die Gasturbine 12 umfasst im einfachsten Fall einen Verdichter 13, der über einen Lufteinlass 16 Verbrennungsluft ansaugt und verdichtet. Der Verdichter 13 kann aus mehreren hintereinander geschalteten Teilverdichtern zusammengesetzt sein, die auf steigendem Druckniveau arbeiten und ggf. eine Zwischenkühlung der verdichteten Luft ermöglichen. Die im Verdichter 13 verdichtete Verbrennungsluft gelangt in eine Brennkammer 15, in die über eine Brennstoffzufuhr 17 flüssiger (z.B. Öl) oder gasförmiger (z.B. Erdgas) Brennstoff eingedüst und unter Verbrauch von Verbrennungsluft verbrannt wird.

Die aus der Brennkammer 15 austretenden heissen Gase werden in einer nachfolgenden Turbine 14 unter Arbeitsleistung entspannt und treiben so den Verdichter 13 der Gasturbine und den angekuppelten Verdichter 11 der Erdgasverflüssigungsanlage an. Die Drehzahl der Gasturbine 12 ist dabei gleich der Drehzahl des externen Verdichters 11.

Die heutzutage üblichen grossen Gasturbineneinheiten mit Leistungen von über 50 MW sind für Drehzahlen der Gasturbine von 3600 U/min (für eine Netzfrequenz von 60 Hz) oder von 3000 U/min (für eine Netzfrequenz von 50 Hz) ausgelegt. Es müssen daher Vorkehrungen getroffen werden, um die Gasturbine mit dem Verdichter zusammen auf die Nenndrehzahl hochzufahren bzw. überschüssige Leistung der Gasturbine abzunehmen.

Aus der US-A-5,689,141 ist ein Antriebssystem für den Verdichter einer Erdgasverflüssigungsanlage bekannt, bei dem der Verdichter auf der einen Seite von einer Gasturbine direkt angetrieben wird, und auf der anderen Seite mit einer Synchronmaschine verbunden ist. Die Synchronmaschine treibt den Verdichterstrang beim Hochfahren der Gasturbine an und bezieht dazu Energie aus einem Netz. Hat die Gasturbine ihre Drehzahl erreicht, arbeitet die Synchronmaschine als Generator und kann von der Gasturbine erzeugte überschüssige Energie in Strom umwandeln und in das Netz zurückspeisen.

Eine vergleichbare Anordnung ist aus der WO-A2-2005/047789 bekannt. Wie in Fig. 2 dargestellt, ist dort ein Motor/Generator 22 auf der gemeinsamen Welle 19 zwischen Gasturbine 12 und externem Verdichter 11 vorgesehen, der über einen variablen Frequenzantrieb 23 an ein Netz 24 angeschlossen ist. Der variable Frequenzantrieb 23 sorgt für einen weichen Anlauf des Verdichterstrangs 10' und speist überschüssige Energie mit Netzfrequenz in das Netz 24 ein, wenn der Motor/Generator 22 als Generator arbeitet.

US 5694026 A relates to a turbine generator set comprising a turbine and a generator coupled to each other without a step-down gear box, and a static frequency converter connected in series between the generator and an AC electricity grid. Das Dokument bezieht sich also auf einen Turbinen - Generatorsatz bestehend aus einer Turbine und einem Generator die miteinander ohne Reduktionsgetriebe verbunden sind, und einem statischen Frequenzumrichter der in Serie zwischen dem Generator und einem Wechselstromnetz verbunden ist.

WO 2006/103159 A1 describes a generator for converting mechanical power to a multi-phase alternating current with a connected matrix converter for converting the multi-phase alternating current to a desired output alternating current. Das Dokument beschreibt also einen Generator um mechanische Leistung auf einen Mehrphasenwechselstrom umzuwandeln und zwar mit einem verbundenen Matrixumrichter um das Mehrphasenwechselstrom auf einen erwünschten Ausgangswechselstrom umzuwandeln.

JP describes a high frequency generator coupled directly to a gas turbine engine, the output of the generator is rectified by a rectifier, converted by an inverter to the desired AC frequency, and output. A field controller controls the field current of the generator in response to the generated output of the generator. Das Dokument beschreibt also einen Stromgenerator für hohe Frequenzen direkt verbunden mit einer Gasturbine. Der erzeugte Generatorstrom wird über einen Gleichrichter gleichgerichtet, und über einen Wechselrichter auf die erwünschte Wechselstromfrequenz umgewandelt und abgegeben. Ein Feldregler regelt den Feldstrom des Generators in Abhängigkeit der Leistungsabgabe des Generators.

EP 1253388 A describes a method and an apparatus for the liquefaction of natural gas. For reliable operation of the compressors of existing LNG plants it is proposed that the power to drive the compressors is derived from the combustion of a portion of the liquefied natural gas. Das Dokument beschreibt also eine Methode und einen Apparat für die Verflüssigung von Erdgas. Für einen zuverlässigen Betrieb der bei Erdgasverflüssigungsanlagen vorhandenen Kompressoren wird vorgeschlagen, die Energie für den Antrieb der Kompressoren aus der Verbrennung eines Teils des verflüssigten Erdgases zu gewinnen.

Folgende Nachteile resultieren aus der starren Kopplung zwischen Turbinendrehzahl und der Drehzahl des Verdichters 11:

- Ein stabiler Betrieb am externen Verdichter ist nur eingeschränkt möglich.
- Eine Verdichter-unabhängige Leistungsregelung der Kraftwerksanlage ist nicht möglich.
- Eine Verbraucher-unabhängige Wirkungsgradoptimierung der Kraftwerksanlage ist nicht möglich.
- Eine Netzfrequenz-unabhängige Teillastoptimierung der Kraftwerksanlage ist nicht möglich.
- Eine Emissionsregelung der Gasturbine ist nur eingeschränkt möglich.

Folgende Nachteile resultieren aus der starren Kopplung zwischen Turbinendrehzahl und der Drehzahl des Verdichters für existierende Anlagenkonzepte mit neu zu entwickelnden Komponenten beziehungsweise Neuanlagen:

- Verdichter und Turbinen können bei fester Drehzahlkopplung nicht im Optimalpunkt ausgelegt werden, wie das im Fall einer Drehzahl-Unabhängigkeit möglich ist.
- Gas- und Dampfturbinen, welche mit fester Drehzahlkopplung ausgelegt werden, sind bei einer gewünschten Leistung nicht zwangsläufig kostenoptimal, da durch die vorgegebene Drehzahl aerodynamische oder mechanische Auslegungsgrenzen die Optimierung behindern, welche im Fall einer Drehzahlvariabilität besser aufeinander abgestimmt werden können.
- Die Gasturbinen können nicht optimal auf variable Umgebungsbedingungen abgestimmt werden

DARSTELLUNG DER ERFINDUNG

Es ist Aufgabe der Erfindung, eine Kraftwerksanlage zur Versorgung eines Verbrauchers zu schaffen, welche die Nachteile bekannter Kraftwerksanlagen vermeidet und sich insbesondere durch einen flexiblen Betrieb bei gleichzeitig hohem Wirkungsgrad auszeichnet, sowie ein Verfahren zu deren Betrieb anzugeben.

Die Aufgabe wird durch die Gesamtheit der Merkmale des Anspruchs 1 gelöst. Vorzugsweise ist dabei die Gasturbine für eine Leistung grösser 50 MW ausgelegt.

Gemäss einer Ausgestaltung der Erfindung unterscheidet sich die erste Betriebsfrequenz deutlich von der zweiten Betriebsfrequenz, wobei die erste Betriebsfrequenz entweder kleiner als die zweite Betriebsfrequenz ist, und die zweite Betriebsfrequenz 50 Hz oder 60 Hz beträgt. Insbesondere kann die zweite Betriebsfrequenz 60 Hz betragen und die erste Betriebsfrequenz bei 50 Hz liegen.

Oder die erste Betriebsfrequenz ist grösser als die zweite Betriebsfrequenz, wobei die zweite Betriebsfrequenz 50 Hz oder 60 Hz beträgt. Insbesondere kann die zweite Betriebsfrequenz 50 Hz betragen und die erste Betriebsfrequenz bei 60 Hz liegen.

Die elektronische Entkopplungsvorrichtung ist ein Frequenzumrichter in Form eines Matrixumrichters, der eine Mehrzahl von in einer (m x n)-Matrix angeordneten, steuerbaren bidirektionalen Schaltern umfasst, welche von einem Regler gesteuert m Eingänge wahlweise mit n Ausgängen verbinden, wobei m grösser n ist, und wobei erste Mittel zur Bestimmung der Vorzeichen der Ströme in den Eingängen und zweite Mittel zur Bestimmung der Vorzeichen der Spannungen zwischen den Eingängen vorgesehen sind, und wobei die ersten und zweiten Mittel mit dem Regler in Wirkverbindung stehen. Bidirektionale Schalter können aus einem Bauteil bestehen aber auch aus mehreren Bauteilen aufgebaut sein. Beispielsweise können zwei anti- parallele Thyristoren mit entgegengesetzter Durchschaltrichtung als steuerbare bidirektionale Schalter verwendet werden. Die Mittel zur Bestimmung der Vorzeichen von Strömen und Spannung können beispielsweise Strom- bzw. Spannungsmesser sein. Alternativ sind z. B. auch binäre Geber, die nur das Vorzeichen ausgeben, anwendbar.

Vorzugsweise ist die Gasturbine als Gasturbine mit sequentieller Verbrennung ausgebildet.

Gemäss einer Ausgestaltung der Erfindung ist der Verbraucher ein von einem Motor angetriebener Verdichter, der Teil einer Anlage zur Verflüssigung von Gas, insbesondere Erdgas (LNG), ist.

Gemäss einer anderen Ausgestaltung der Erfindung ist der Verbraucher ein Bahnstromnetz.

Gemäss einer weiteren Ausgestaltung der Erfindung ist der Verbraucher ein elektrisches Netz. Insbesondere kann das Kraftwerk für Netze mit verschieden Frequenzen Anwendung finden. Eine weitere besondere Anwendung ist die wahlweise Stromlieferung in ein Stromnetz mit 50 Hz und ein Stromnetz mit 60 Hz möglich, wie es in den Grenzbereichen von Ländern oder Regionen mit verschiedenen Stromnetzen vorteilhaft ist.

Weiterhin ist es im Rahmen der Erfindung denkbar, dass der Ausgang des Generators mit einem Netz verbindbar ist, und dass zur wahlweisen Verbindung des Generators mit dem Netz und dem Verbraucher eine Umschalteinrichtung vorgesehen ist.

KURZE ERLÄUTERUNG DER FIGUREN

Die Erfindung soll nachfolgend anhand von Ausführungsbeispielen im Zusammenhang mit der Zeichnung näher erläutert werden. Es zeigen

Fig. 1     ein stark vereinfachtes Schaltbild einer Kraftwerksanlage mit Gasturbine und einem direkt angetriebenen externen Verdichter nach dem Stand der Technik;

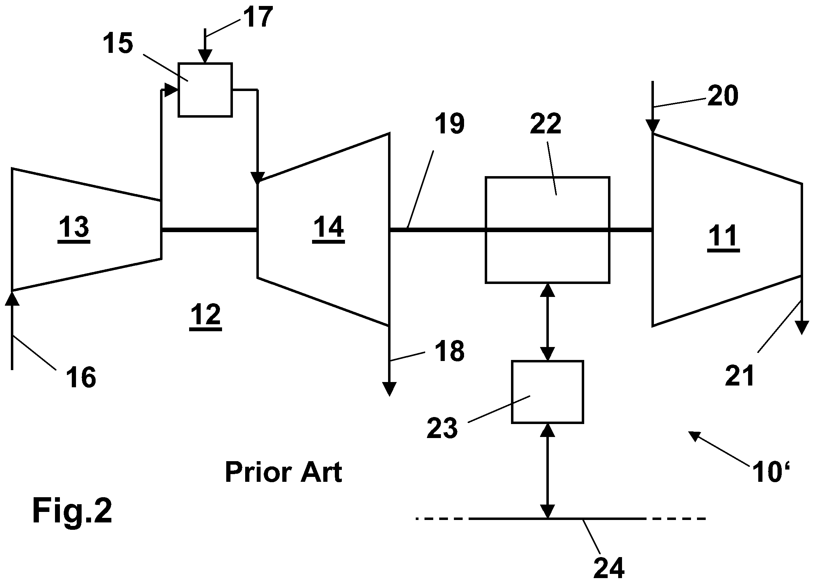

Fig. 2     ein stark vereinfachtes Schaltbild einer Kraftwerksanlage mit Gasturbine und einem direkt angetrieben externen Verdichter und zwischengeschaltetem Motor/Generator nach dem Stand der Technik;

Fig. 3     ein stark vereinfachtes Schaltbild einer Kraftwerksanlage mit Gasturbine, Generator und einem Verbraucher sowie einer elektronischen Entkopplungsvorrichtung gemäss einem Ausführungsbeispiel der Erfindung;

Fig. 4     den beispielhaften inneren Aufbau eines Matrixumrichters, wie er als elektronische Entkopplungsvorrichtung in einer Anlage nach Fig. 3 zum Einsatz kommen kann;

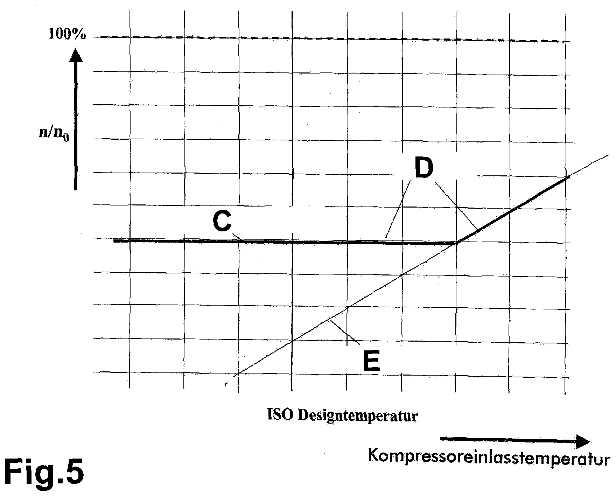

Fig. 5     die Abhängigkeit der Drehzahl von der Kompressoreinlasstemperatur; und

Fig. 6     die Regelung der aerodynamischen Drehzahl n* und der mechanischen Drehzahl $n_{mech}$ über die Kompressoreintrittstemperatur $T_{K1}$.

WEGE ZUR AUSFÜHRUNG DER ERFINDUNG

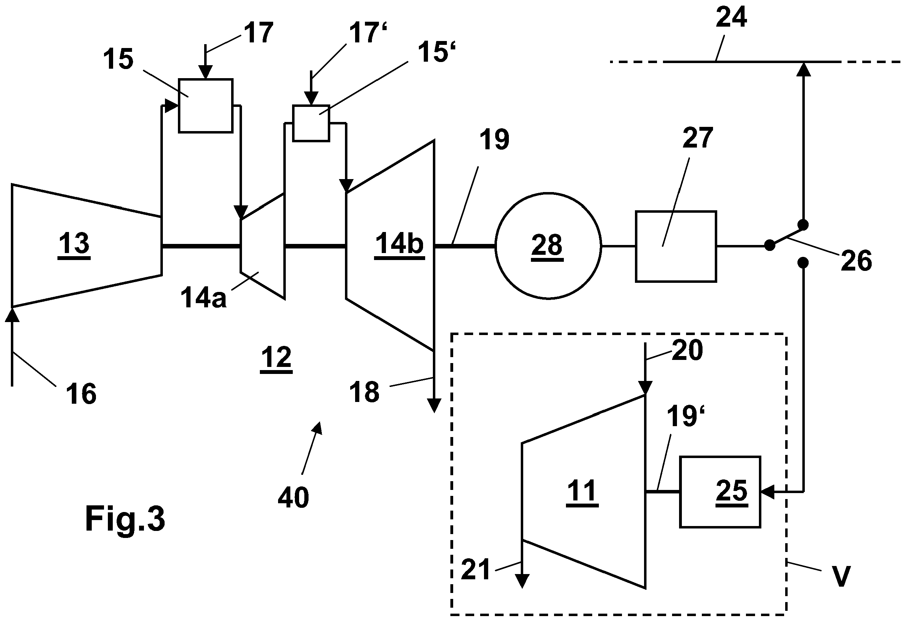

In Fig. 3 ist in einem stark vereinfachten Schaltbild eine Kraftwerksanlage mit Gasturbine, Generator und einem Verbraucher sowie einer elektronischen Entkopplungsvorrichtung gemäss einem Ausführungsbeispiel der Erfindung wiedergegeben. Die Kraftwerksanlage 40 umfasst eine Gasturbine 12 mit einem Verdichter 13 und sequentieller Verbrennung, bei der eine erste Brennkammer 15 mit einem ersten Brennstoff über eine erste Brennstoffzufuhr 17 Heissgas erzeugt, das in einer ersten Turbine 14a entspannt wird, dann in eine zweite Brennkammer 15' geleitet wird, wo es mit einem zweiten Brennstoff über eine zweite Brennstoffzufuhr 17' eine zweite Erhöhung der Temperatur des Heissgases bewirkt, das dann in der zweiten Turbine 14b entspannt wird. Anstelle der im Hinblick auf den Wirkungsgrad besonders günstigen sequentiellen Verbrennung kann aber auch eine einstufige Verbrennung vorgesehen werden.

Ein Generator 28 ist direkt an die Welle 19 der Gasturbine 12 angekuppelt. Damit dreht der Generator 28 mit derselben Drehzahl wie die Gasturbine 12. Der Ausgang des Generators 28 ist mit einem Verbraucher V verbindbar, der im vorliegenden Beispiel einen von einem elektrischen Motor 25 angetriebenen Verdichter 11 einer Erdgasverflüssigungsanlage mit einem Gaseinlass 20 und einem Gasauslass 21 umfasst. Es sind jedoch auch andere, Wechselspannung mit einer bestimmten Betriebsfrequenz benötigende Verbraucher denkbar, wie z.B. ein Bahnstromnetz. Zwischen dem Ausgang des Generators 28 und dem Verbraucher V ist eine elektronische Entkopplungsvorrichtung 17 angeordnet, die eine Entkopplung der im Generator 28 erzeugten ersten Betriebsfrequenz bzw. der Drehzahl der Gasturbine 12 von der zweiten Betriebsfrequenz des Verbrauchers V bewirkt.

Die Kraftwerksanlage 40 der Fig. 3 kann direkt und ausschliesslich einen Verbraucher V versorgen. Es ist aber auch denkbar, dass sie die erzeugte elektrische Leistung wahlweise in ein Netz 24 einspeisen kann, wobei aufgrund der elektronischen Entkopplungsvorrichtung 27 die Betriebsfrequenz an die Netzfrequenz angepasst werden kann, ohne dass die Drehzahl der Gasturbine 12 geändert werden muss. Im Schema der Fig. 3 ist am Ausgang der elektronischen Entkopplungsvorrichtung 27 eine Umschalteinrichtung 26 vorgesehen, mit der die von der Kraftwerksanlage 40 erzeugte Leistung wahlweise an das Netz 24 oder an den Verbraucher V abgegeben werden kann.

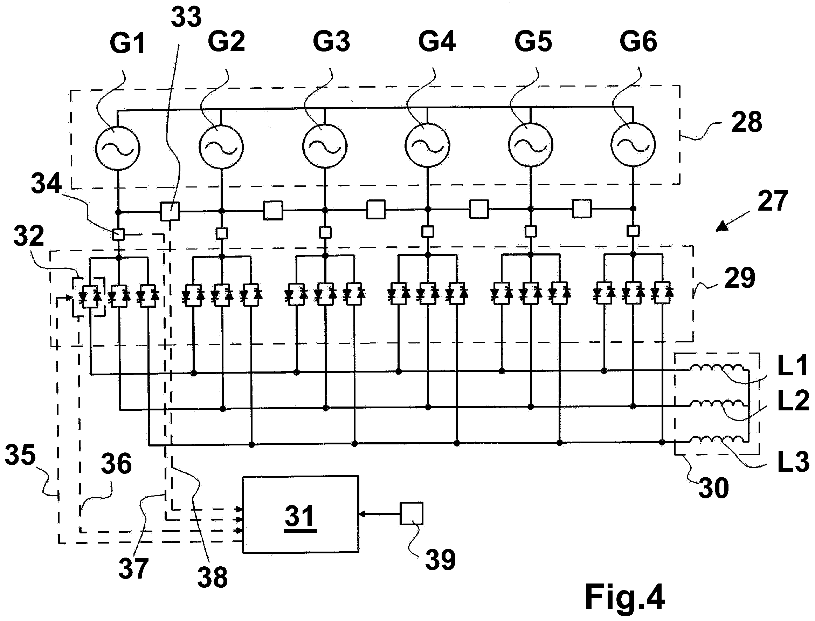

Die elektronische Entkopplungsvorrichtung 27 ist - um die Verlustleistung zu begrenzen - als Matrixumrichter ohne Gleichstromzwischenkreis ausgebildet. Ein solcher Matrixumrichter, der aufgrund seiner Ansteuerung besonders verlustarm arbeitet, ist in der EP-A2-1 199 794 im Aufbau und in der Wirkungsweise beschrieben worden. Weitere Ausführungen zu einem solchen Matrixumrichter sind in der EP-A1-1 561 273, in der DE-A1-10 2004 016 453, der DE-A1-10 2004 016 463 und der DE-A1-10 2004 016 464 gemacht worden. In Fig. 4 ist das Prinzipschaltbild eines Matrixumrichters mit 6 Eingangsphasen und 3 Ausgangsphasen dargestellt. Der Matrixumrichter (27) verbindet in einer zeitlichen Abfolge 6 Phasen G1,..,G6 eines Generators 28 als Quelle mit 3 Phasen L1,..,L3 einer Last 30. Der dazu benötigte Leistungsteil 29 umfasst 18 bidirektionale Schalter 32 in Form von antiparallel geschalteten Thyristoren (im allgemeinen Fall gibt es m x n Schalter für m Eingangs/Quellen-Phasen und n Ausgangs/Last-Phasen). Die Schalter 32 sind in einer (6 x 3)-Matrix angeordnet. Für die Ansteuerung der Schalter 32 ist eine Steuerung oder ein Regler 31 vorgesehen, der von einem Taktgeber 39 Zeitsignale (eine Taktfrequenz) erhält. Der Schaltzustand der Schalter 32 (EIN, AUS) wird überwacht und jeweils über eine erste Signalleitung 36 an den Regler 31 gemeldet. Die Schalter 32 werden von dem Regler 31 jeweils über eine Steuerleitung 35 angesteuert.

In den einzelnen Phasen G1,..,G6 des Generators 28 ist jeweils eine Strommesseinrichtung 34 angeordnet, die das Vorzeichen des Phasenstromes über eine zweite Signalleitung 37 an den Regler 31 meldet. Weiterhin sind zwischen den Phasen G1,..,G6 des Generators 28 Spannungsmesseinrichtungen 33 angeordnet, die das Vorzeichen der jeweiligen Phasendifferenzspannung über eine dritte Signalleitung 38 an den Regler 31 melden. Zu den Einzelheiten des Betriebsablaufs des Matrixumrichters wird auf die o.g. Druckschriften verwiesen.

Mit der Entkopplungsvorrichtung 27 in Form eines Matrixumrichters der beschriebenen Art, ergeben sich die folgenden Vorteile einer elektronischen Entkoppelung:

- Eine Anpassung der Betriebsoptima (Leistung, Wirkungsgrad) der Gasturbine in Abhängigkeit von den Umgebungsbedingungen (z.B. der Eintrittstemperatur) ist möglich.
- Die Leistung kann erhöht werden.
- Der Wirkungsgrad kann verbessert werden.
- Die Flexibilität bei Lastschwankungen und die Lebensdauer der Turbine können verbessert werden. Die Turbine kann drehzahlkonstant laufen. Die Emissionswerte können verbessert werden. Der zusätzliche Freiheitsgrad einer variablen Drehzahl erlaubt eine gewünschte Leistung bei einer höheren oder niedrigeren Drehzahl anzufahren. Damit verbunden sind, im Fall einer Gasturbine als Antrieb, niedrigere oder höhere Turbineneintritts-Temperaturen mit dem Effekt der Beeinflussung der Emissionen von $CO_2$ und NOx.
- Eine Entkopplung der Betriebsfrequenzen erlaubt den Bau von Kraftwerksanlagen, bei denen die Baugrösse für eine gewünschte Leistung minimiert werden kann, und zwar durch den zusätzlichen Freiheitsgrad, dass die Drehzahl verbraucherunabhängig eingestellt werden kann. (z.B. baut eine Turbine mit 3300 U/min deutlich kleiner als eine Turbine mit 3000 U/min). Dadurch lassen sich auch die Baukosten reduzieren.

Die vorrangige Möglichkeit gemäss der Erfindung einen Turbinenstrang - Turbine und Generator - innerhalb einer Kraftwerksanlage unabhängig von der Betriebsfrequenz des Verbrauchers stabil bei einer gewünschten Drehzahl betreiben zu können, unterstützt - wenn auf das Netz 24 umgeschaltet ist - die Stabilisierung des Netzes 24. Bei Frequenzeinbrüchen muss die Kraftwerksanlage in der Lage sein, die bei normaler Netzfrequenz abgegebene Leistung zu halten, Idealerweise sogar eine erhöhte Leistung an das Stromnetz abzugeben. Bisherige Kraftwerkssysteme können dies nur in einem begrenzten Mass sicherstellen. Die Netzfrequenzabsenkung spürt ein fest mit der Netzfrequenz gekoppeltes System als unerwünschte Drehzahlabsenkung auf der Turbine und dem Generator. Nach einer kurzen Phase, während derer aus dem Gasturbinen-Generator-Wellenstrang durch die Drehzahlverzögerung kinetische Energie in das Netz gespeist wird, sinkt die abgegebene Leistung bei ansonsten gleichen Betriebsparametern. Ein Gasturbinensystem reagiert in diesem Fall mit einem reduzierten Ansaugmassenstrom und deutlich erhöhter Brennstoffzufuhr, was zu einer erhöhten Heissgas-Temperatur innerhalb der Turbine führt. Diese wiederum reduziert erheblich die Lebensdauer der Turbine, was die Betriebskosten der Anlage steigert. Der Schadstoffausstoss in Form von NOx erhöht sich in dieser Betriebsphase ebenfalls deutlich. Somit sind bereits zwei Grenzen definiert, die eine Leistungserhöhung bei Netzfrequenzabfall stark einschränken - Lebensdauer und Emissionen. Als dritter Aspekt spielt die mechanische und aerodynamische Verträglichkeit eine Rolle. Starke Frequenzabfälle über 6% führen zum Abschalten von Kraftwerksanlagen, da diese mechanisch nicht in der Lage sind, mit entsprechend reduzierten Drehzahlen betrieben werden zu können. Bei tiefer aerodynamischer Drehzahl

$$n^* = n_{mech} \frac{p}{\sqrt{\kappa T}}, \text{ n}_{mech} = \text{mechanische Drehzahl,}$$

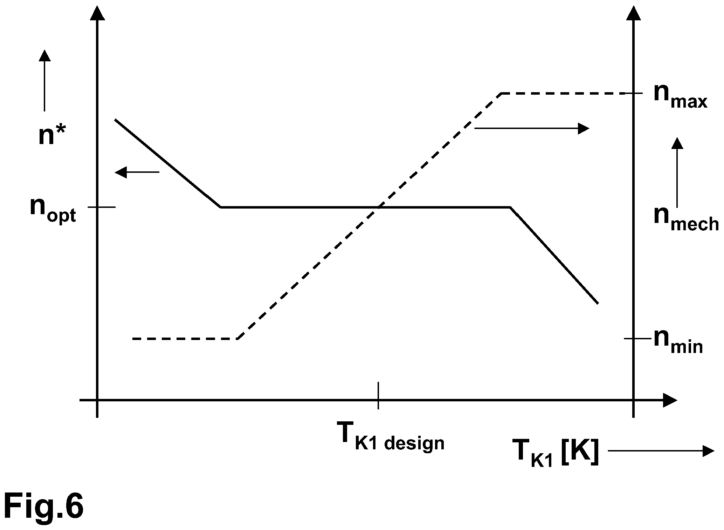

wird der Betrieb ferner durch die Pumpgrenze des Kompressors eingeschränkt (siehe Fig. 6; C = mechanische Drehzahllimit, D = Lastabwurf und E = Kompressorpumpschutz).

Im Falle eines Verbraucher-entkoppelten Systems entfallen alle oben geschilderten Nachteile. Es gibt keine Einschränkung bezüglich minimal zulässiger Frequenzschwankungen, da der Turbinenstrang keine aufgeprägte Drehzahlschwankung spürt. Demzufolge treten auch keine Schadstofferhöhungen und Einbussen bei der Lebensdauer auf.

Neben der Netzstabilisierung erlaubt ein Verbraucher-unabhängiges Kraftwerkssystem auch die Leistungs- oder Wirkungsgradoptimierung jedes Betriebspunkts, insbesondere auch bei Teillastbetriebspunkten. Durch eine Betriebspunkt-abhängige geeignete Drehzahlregelung, im Rahmen der zulässigen mechanischen Grenzen, erreicht man entweder eine Emissions- und Brennstoffersparnis durch die Steigerung des Turbinenwirkungsgrades oder alternativ eine Leistungssteigerung, welche die Flexibilität eines Kraftwerks in Bezug auf die Abdeckung von Spitzenlasten steigert.

Ein weiterer positiver Aspekt eines Verbraucher-unabhängigen Kraftwerksystems, ist die bessere Anpassungsfähigkeit einer Anlage an unterschiedliche Standortbedingungen. Es sind vor allem unterschiedliche Umgebungsbedingungen, wie Aussentemperaturen, Luftfeuchtigkeit, auch Brennstoffzusammensetzung, welche den Betriebzustand einer Kraftwerksanlage beeinflussen. Der zusätzliche Freiheitsgrad der Verbraucher-unabhängigen Drehzahlregelung erlaubt es, entsprechend den aktuellen Umgebungsbedingungen jeweils optimierte Betriebsbedingungen zu erzeugen. Dabei sind Wirkungsgradverbesserungen oder auch Leistungssteigerungen möglich.

Alle oben aufgeführten Aspekte können bereits für bestehende Turbinen umgesetzt werden. Darüber hinaus eröffnen sich verschiedene Möglichkeiten, wie Gasturbinen optimiert werden können, sofern die Drehzahl der Gasturbine unlimitiert durch die zweite Betriebsfrequenz des Verbrauchers ist.

Turbokomponenten, Verdichter und Turbine können mit neuen Randbedingungen ausgelegt werden. Bisher ist es auch bei stationären Gasturbinen nötig, einen minimalen Arbeitsbereich von ca. +/-10% reduzierter Drehzahl als Sicherheitsfenster zu berücksichtigen. Damit wird sichergestellt, dass die Gasturbine zum einen mechanische Drehzahlschwankungen ertragen kann. Zum anderen können Änderungen der Eintrittstemperatur, welche im Verhältnis $1/(T_{Eintritt})^{1/2}$ in die reduzierte Drehzahl eingehen, abgedeckt werden. Schränkt man durch ein optimiertes Fahrkonzept den benötigten reduzierten Drehzahlbereich ein, kann durch eine Neuauslegung der Verdichter- und Turbinenbeschaufelung sowohl ein Wirkungsgrad- als auch ein Leistungsgewinn erreicht werden.

Beim Betrieb der Kraftwerksanlage 10 kann die mechanische oder aerodynamische Drehzahl ($n_{mech}$ bzw. $n*$) der Gasturbine 12 auf einen konstanten Wert geregelt werden.

Es ist aber auch denkbar (Fig. 6), dass die aerodynamische Drehzahl $n*$ der Gasturbine 12 im zulässigen mechanischen Drehzahlbereich auf einen konstanten Wert geregelt wird, dass die mechanische Drehzahl $n_{mech}$ auf einen konstanten Wert geregelt wird, sobald mechanische oder andere Grenzwerte wie z.B. Drücke oder Temperaturen erreicht werden, und dass die mechanische Drehzahl $n_{mech}$ nachgeregelt bzw. reduziert wird, wenn kritische Drücke oder Temperaturen erreicht werden.

BEZUGSZEICHENLISTE

| | |
|---|---|
| 10,10" | Verdichterstrang |
| 11 | Verdichter (extern) |
| 12 | Gasturbine |
| 13 | Verdichter |
| 14,14a,b | Turbine |
| 15,15' | Brennkammer |
| 16 | Lufteinlass |
| 17,17' | Brennstoffzufuhr |
| 18 | Abgasauslass |
| 19,19' | Welle |
| 20 | Gaseinlass |
| 21 | Gasauslass |
| 22 | Motor/Generator |
| 23 | variabler Frequenzantrieb |
| 24 | Netz |
| 25 | Motor |
| 26 | Umschalteinrichtung |
| 27 | Entkopplungsvorrichtung |
| 28 | Generator |
| 29 | Leistungsteil |
| 30 | Last |
| 31 | Regler |
| 32 | Schalter (bidirektional) |
| 33 | Spannungsmesseinrichtung |
| 34 | Strommesseinrichtung |
| 35 | Steuerleitung |

| 36,..,38 | Signalleitung |
|---|---|
| 39 | Taktgeber |
| 40 | Kraftwerksanlage |
| G1,..,G6 | Phase (Generator) |
| L1,..,L3 | Phase (Last) |
| V | Verbraucher |

**Patentansprüche**

1. Kraftwerksanlage (40) mit einem Turbinenstrang aus einer Gasturbine (12) und einem von der Gasturbine (12) direkt angetriebenen, Wechselstrom mit einer ersten Betriebsfrequenz erzeugenden Generator (28), dessen Ausgang mit wenigstens einem Verbraucher (V) mit vorgegebener zweiter Betriebsfrequenz verbindbar ist, wobei zwischen dem Generator (28) und dem Verbraucher (V) ein Frequenzumrichter als elektronische Entkopplungsvorrichtung (27) angeordnet ist, welche die beiden Betriebsfrequenzen voneinander entkoppelt, **dadurch gekennzeichnet, dass** der Frequenzumrichter ein Matrixumrichter ist, wobei die aerodynamische Drehzahl der Gasturbine (12) im zulässigen mechanischen Drehzahlbereich auf einen konstanten Wert geregelt wird, dass die mechanische Drehzahl auf einen konstanten Wert geregelt wird, sobald mechanische oder andere Grenzwerte wie z.B. Drücke oder Temperaturen erreicht werden, und dass die mechanische Drehzahl nachgeregelt bzw. reduziert wird, wenn kritische Drücke oder Temperaturen erreicht werden.

2. Kraftwerksanlage nach Anspruch 1, **dadurch gekennzeichnet, dass** die Gasturbine (12) für eine Leistung grösser 50 MW ausgelegt ist.

3. Kraftwerksanlage nach Anspruch 1 oder 2, **dadurch gekennzeichnet, dass** die erste Betriebsfrequenz sich deutlich von der zweiten Betriebsfrequenz unterscheidet.

4. Kraftwerksanlage nach Anspruch 3, **dadurch gekennzeichnet, dass** die zweite Betriebsfrequenz 50 Hz oder 60 Hz beträgt.

5. Kraftwerksanlage nach Anspruch 4, **dadurch gekennzeichnet, dass** die zweite Betriebsfrequenz 60 Hz beträgt und die erste Betriebsfrequenz bei 50 Hz liegt.

6. Kraftwerksanlage nach Anspruch 4, **dadurch gekennzeichnet, dass** die zweite Betriebsfrequenz 50 Hz beträgt und die erste Betriebsfrequenz bei 60 Hz liegt.

7. Kraftwerksanlage nach einem der Ansprüche 1 bis 6, **dadurch gekennzeichnet, dass** der Matrixumrichter eine Mehrzahl von in einer (m x n)-Matrix angeordneten, steuerbaren bidirektionalen Schaltern (32) umfasst, welche von einem Regler (31) gesteuert m Eingänge wahlweise mit n Ausgängen verbinden, wobei m grösser n ist, und wobei erste Mittel (34) zur Bestimmung der Vorzeichen der Ströme in den Eingängen und zweite Mittel (33) zur Bestimmung der Vorzeichen der Spannungen zwischen den Eingängen vorgesehen sind, und wobei die ersten und zweiten Mittel (34 bzw. 33) mit dem Regler (31) durch Signalleitungen (38) verbunden sind.

8. Kraftwerksanlage nach einem der Ansprüche 1 bis 7, **dadurch gekennzeichnet, dass** die Gasturbine (12) als Gasturbine mit sequentieller Verbrennung (14a,b; 15, 15') ausgebildet ist.

9. Kraftwerksanlage nach einem der Ansprüche 1 bis 8, **dadurch gekennzeichnet, dass** der Verbraucher (V) ein von einem Motor (25) angetriebener Verdichter (11) ist, und dass der Verdichter (11) Teil einer Anlage zur Verflüssigung von Gas, insbesondere Erdgas (LNG), ist.

10. Kraftwerksanlage nach einem der Ansprüche 1 bis 8, **dadurch gekennzeichnet, dass** der Verbraucher (V) ein Bahnstromnetz ist.

11. Kraftwerksanlage nach einem der Ansprüche 1 bis 8, **dadurch gekennzeichnet, dass** der Verbraucher (V) ein elektrisches Netz ist.

12. Kraftwerksanlage nach einem der Ansprüche 1 bis 10, **dadurch gekennzeichnet, dass** der Ausgang des Generators (28) mit einem Netz (24) verbindbar ist, und dass zur wahlweisen Verbindung des Generators (28) mit dem Netz (24) und dem Verbraucher (V) eine Umschalteinrichtung (26) vorgesehen ist.

**Claims**

1. Power plant (40) comprising a turbine train composed of a gas turbine (12) and a generator (28), directly driven by the gas turbine (12) and generating alternating current of a first operating frequency, the output of said generator being connectible to at least one consumer (V) of a predetermined second operating frequency, wherein a frequency convertor is interposed as electronic decoupling device (27) between the generator (28) and the consumer (V) and decouples the two operating frequencies from each other, **characterised in that** the frequency convertor is a matrix converter, wherein the aerodynamic rotation speed of the gas turbine (12) is controlled at a constant value in the permissible mechanical rotation speed range, **in that** the mechanical rotation speed is controlled at a constant value as soon as mechanical or other limit values, e.g. pressures or temperatures, are reached, and **in that** the mechanical rotation speed is readjusted or reduced, when critical pressures or temperatures are reached.

2. Power plant according to claim 1, **characterised in that** the gas turbine (12) is designed for an output of more than 50MW.

3. Power plant according to claim 1 or 2, **characterised in that** the first operating frequency differs considerably from the second operating frequency.

4. Power plant according to claim 3, **characterised in that** the second operating frequency is 50Hz or 60Hz.

5. Power plant according to claim 4, **characterised in that** the second operating frequency is 60Hz and the first operating frequency is 50Hz.

6. Power plant according to claim 4, **characterised in that** the second operating frequency is 50Hz and the first operating frequency is 60Hz.

7. Power plant according to any one of claims 1 to 6, **characterised in that** the matrix converter comprises a plurality of controllable bi-directional switches (32) which are arranged in an (m × n) matrix and, controlled by a controller (31), selectively connect m inputs to n outputs, where m is greater than n, and wherein first devices (34) are provided for determining the polarities of the currents in the inputs and second devices (33) are provided for determining the polarities of the voltages between the inputs, and wherein the first and second devices (34 and 33, respectively) are connected to the controller (31) by signal lines (38).

8. Power plant according to any one of claims 1 to 7, **characterised in that** the gas turbine (12) is embodied as gas turbine with sequential combustion (14a,b; 15, 15').

9. Power plant according to any one of claims 1 to 8, **characterised in that** the consumer (V) is a compressor (11) which is driven by a motor (25), and **in that** the compressor (11) is part of an installation for liquefaction of gas, in particular natural gas.

10. Power plant according to any one of claims 1 to 8, **characterised in that** the consumer (V) is a railway electrical grid.

11. Power plant according to any one of claims 1 to 8, **characterised in that** the consumer (V) is an electrical grid.

12. Power plant according to any one of claims 1 to 10, **characterised in that** the output of the generator (28) can be connected to a grid (24), and a switching device (26) is provided for selective connection of the generator (28) to the grid (24) and to the consumer (V).

**Revendications**

1. Centrale électrique (40) avec une chaîne de turbine formée d'une turbine à gaz (12) et d'un générateur (28) entraîné directement par la turbine à gaz (12), générant un courant alternatif avec une première fréquence de fonctionnement, dont la sortie peut être reliée à au moins un consommateur (V) avec une deuxième fréquence de fonctionnement prédéfinie, dans laquelle un convertisseur de fréquence est agencé en tant que dispositif de découplage électronique (27) entre le générateur (28) et le consommateur (V), lequel découple l'une de l'autre les deux fréquences de fonctionnement, **caractérisée en ce que** le convertisseur de fréquence est un convertisseur matriciel, dans laquelle la vitesse de rotation aérodynamique de la turbine à gaz (12) est réglée dans la plage de vitesse de rotation mécanique admissible à une valeur constante, que la vitesse de rotation mécanique est réglée à une valeur constante dès que des valeurs limite mécaniques ou autres comme par exemple pressions ou températures sont atteintes, et que la vitesse de rotation mécanique est réajustée ou réduite, lorsque des pressions ou températures critiques sont atteintes.

2. Centrale électrique selon la revendication 1, **caractérisée en ce que** la turbine à gaz (12) est conçue pour une puissance supérieure à 50 MW.

3. Centrale électrique selon la revendication 1 ou 2, **caractérisée en ce que** la première fréquence de fonctionnement se distingue nettement de la deuxième fréquence de fonctionnement.

4. Centrale électrique selon la revendication 3, **caractérisée en ce que** la deuxième fréquence de fonctionnement s'élève à 50 Hz ou 60 Hz.

5. Centrale électrique selon la revendication 4, **caractérisée en ce que** la deuxième fréquence de fonctionnement s'élève à 60 Hz et la première fréquence de fonctionnement est de 50 Hz.

6. Centrale électrique selon la revendication 4, **caractérisée en ce que** la deuxième fréquence de fonctionnement s'élève à 50 Hz et la première fréquence de fonctionnement est de 60 Hz.

7. Centrale électrique selon l'une quelconque des revendications 1 à 6, **caractérisée en ce que** le convertisseur matriciel comprend une pluralité d'interrupteurs bidirectionnels (32) pouvant être commandés, agencés dans une matrice (m x n), lesquels relient de manière commandée par un régulateur (31) m entrées au choix à n sorties, dans laquelle m est supérieur à n, et dans laquelle des premiers moyens (34) de détermination des signes algébriques des courants dans les entrées et des deuxièmes moyens (33) de détermination des signes algébriques des tensions entre les entrées sont prévus, et dans laquelle les premier et deuxième moyens (34 ou 33) sont reliés au régulateur (31) par des lignes de signaux (38).

8. Centrale électrique selon l'une quelconque des revendications 1 à 7, **caractérisée en ce que** la turbine à gaz (12) est réalisée en tant que turbine à gaz avec combustion séquentielle (14a, b ; 15, 15').

9. Centrale électrique selon l'une quelconque des revendications 1 à 8, **caractérisée en ce que** le consommateur (V) est un compresseur (11) entraîné par un moteur (25), et que le compresseur (11) fait partie d'une installation de liquéfaction de gaz, en particulier de gaz naturel (LNG).

10. Centrale électrique selon l'une quelconque des revendications 1 à 8, **caractérisée en ce que** le consommateur (V) est un réseau électrique ferroviaire.

11. Centrale électrique selon l'une quelconque des revendications 1 à 8, **caractérisée en ce que** le consommateur (V) est un réseau électrique.

12. Centrale électrique selon l'une quelconque des revendications 1 à 10, **caractérisée en ce que** la sortie du générateur (28) peut être reliée à un réseau (24), et qu'un équipement de commutation (26) est prévu pour la liaison sélective du générateur (28) au réseau (24) et au consommateur (V).

**Prior Art**

**Fig.1**

Fig.2

Prior Art

Fig.3

**Fig.4**

EP 2 118 449 B1

Fig.5

14

Fig.6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5689141 A
- WO 2005047789 A2
- US 5694026 A
- WO 2006103159 A1
- EP 1253388 A
- EP 1199794 A2
- EP 1561273 A1
- DE 1102004016453 A
- DE 102004016463 A1
- DE 1102004016464 A